# EUROPEAN PATENT APPLICATION

(11) **EP 1 571 584 A1**
(43) Date of publication of application: **07.09.2005**
(21) Application number: 04012383.8
(22) Date of filing: 25.05.2004
(51) Int. Cl.: G06K 9/00

(54) **Integrating visual and object information in a pervasive computing environment**

(30) Priority: 03.03.2004 EP 04005027
(71) Applicant: Honda Research Institute Europe GmbH, 63073 Offenbach/Main (DE)
(72) Inventor: Goerick, Christian, Dr.c/o Honda R.I. Europe GmbH, 63073 Offenbach (DE); Körner, Edgar, c/o Honda Res. Inst. Europe GmbH, 63073 - Offenbach/Main (DE); Sendhoff, Bernhard, Honda Res. Inst. Europa GmbH, 63073 - Offenbach/Main (DE); Richter, Andreas, Honda Res. Inst. Europa GmbH, 63073 - Offenbach/Main (DE)
(74) Representative: Rupp, Christian

(57) **Abstract**

A computing system gathers information from the environment, the system comprising:
- means for gathering visual information from the environment,
- means for receiving information actively transmitted by objects in the environment of the computing system, and
- means for combining the visual information as well as the wirelessly received information in order to recognize objects.

## Description

Scene analysis using visual information is an active research field. In particular for constrained environments and restricted number of objects, successful applications have been reported, i.e., face recognition. At the same time, in natural environments the success of purely visual information from monocular or stereo camera systems has been limited. Often additional sensors have been added, e.g., radar or infrared sensors, to support and ease the processing done by the vision system.

"Pervasive Computing" relates to devices having processing and communication capabilities, but which are not considered traditional computers. In pervasive and ubiquitous computing environments each element or object in the environment transmits some information which can either be used by any of the other objects and/or by a new object entering the room. An example is a mobile computer which is taken into such an computing environment and is automatically able to detect and connect to printers and networks that are available. However, such small computing devices are not restricted to technological objects, they can easily be used in clothing or attached to objects of every day usage.

GB 2347834A discloses pervasive computing devices.

US 2003/0149803A1 discloses a system in an ubiquitous computing environment using multimodal integration.

It is the object of the present invention to improve the capabilities of a computing device to gather information on objects in its environment.

This object is achieved by means of the feature of the independent claims. The dependent claims develop further the central idea of the present invention.

According to a first aspect of the present invention, a computing system can gather information from the environment and especially on objects in its environment, the system comprising:
- means for gathering visual information from the environment,
- means for receiving information actively transmitted by objects in the environment of the computing system, and
- means for combining the visual information as well as the wirelessly received information in order to recognize objects.

The computing system can be a mobile computing device.

The computing device can be a (f.e. humanoid) robot.

The computing device can be fixed to an automobile or motorbike.

The computing device can be a stationary device.

A further aspect of the present invention relates to a method for gathering information from the environment, the method comprising the following steps:
- gathering visual information from the environment,
- receiving information actively transmitted by objects in the environment of the computing system, and
- combining the visual information as well as the wirelessly received information in order to recognize objects.

A still further aspect of the present invention relates to a computer program product implementing such a method.

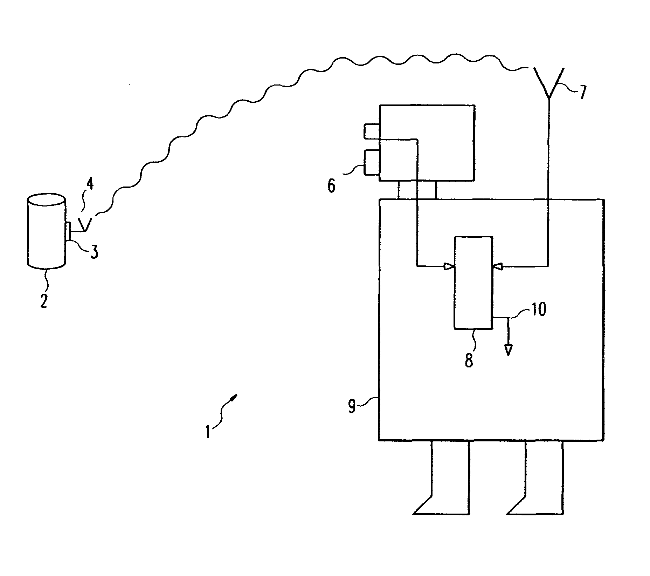

Further features, advantages and objects of the present invention will now be explained with reference to the only figure of the enclosed drawings showing schematically a system according to the present invention.

In the figure reference 1 generally designates a system for gathering and logically processing multimodal information on the environment, and particularly on objects 2 in the environment of a computing device 9. Note that "environment" designates an area surrounding the computing device 9, wherein said area is defined such that the computing device 9 can gather sensorial information or receive wirelessly transmitted signals from objects located within said area.

The computing device 9 is provided with at least two devices 6, 7 for gathering information, i.e. a visual snesor means (camera etc.) 6 and an antenna 7 with following receiver stage (not shown in the figure) for receiving wirelessly transmitted information from the object 2.

The two input data streams are combined and processed in an integrator unit 2 which makes a decision on objects identified by the at least two multimodal input streams and which can generate output signals 10 based on said decision f.e. in order to activate an actuator or to move the computing device toward an identified object.

The object 2 is provided with an RF ID tag transmitting information on the associated object 2.

The invention therefore proposes an integrator unit 8 which is able to combine visual information with information transmitted from objects and elements in a pervasive of ubiquitous computing environment. Information which is often difficult to obtain from purely visual analysis can thereby be augmented by information from the object itself and vice versa. We will refer to the information which is transmitted by the object as *subjective information* and the information which is gathered by the vision system as *objective information.*

The reason for this differentiation is as follows. The information transmitted by the object is only information from the viewpoint of the object itself, i.e., it is object-centred. Examples of this type of information can be as follows: *static information* like: existence, shape, color, weight, symmetry information, fragility, etc. - *dynamic information:* temperature, full/empty, etc.

The vision system, however, can gather information which is not just centered on one object, but takes relations between and positions of objects into account, therefore, we call this type of information objective. This differentiation also highlights the difference between our invention and the state of the art which usually concentrats on adding additional sensory devices to a system and fusing the information provided by these different devices. However, in this invention we are combining different types of information, *subjective* and *objective.*

Usually, the camera system and the integrator will be mounted on a mobile platform, like a humanoid robot - however alternative scenarios are conceivable, see below. The platform will enter a pervasive computing environment, which in its simplest case can be one object which is able to supply information about itself. This information will be combined by the integrator at different stages with the visual information processing system and with behaviour generation systems. In the mobile platform scenario, the object could be a mug on a table. The mug is f.e. provided with a RF ID tag to send out subjective information about its existence, like shape, color, weight, moderately fragile. The RF ID tag can f.e. actively send out this information upon receipt of a requesting activation signal from the integrator.

At the same time the vision system will already be able to supply several hypothesis for objects on the table (some might be artefacts or from objects which are not part of the pervasive computing environment). Based on coarse information like color the integrator can focus the vision system on a particular part of its field of view. Using shape information it is possible to decide whether the object is partially occluded. Furthermore, it could deduce which side of the object is facing the mobile platform, e.g. for grasping purposes it might be necessary for the platform to change its position. A decision whether two objects partially occlude each other or whether they are parts of one object can be difficult to reach from an objective or subjective information source alone. Using the pervasive computing environment and the visual information, the integrator can reach such a decision with little effort. Furthermore, the integrator can provide additional information like on the degree of fragility or empty/full to other devices of the overall system like a manipulator. This information can be used by the system driving the manipulator on how to and with how much force to approach the object.

Examples for the application of the integrator system are as follows:
- a humanoid robot with the integrator system and a camera system on board entering a pervasive computing environment
- an automobile with the integrator system and a camera systems on board gathering information from other automobiles, intelligent clothes from pedestrians, from traffic signs and other objects related to a traffic scene that can be supplied with pervasive computing devices
- a stationary integrator and camera system, where the object enters the area of surveillance. Example would be in-room systems or surveillance systems in airports, banks, train stations etc. The pervasive computing objects would enter the area of the stationary system, examples are intelligent clothes, luggage, etc.
- integrator and camera system on mobile devices like pda's, laptops or mobile telephones.

The system can be summarized as follows:
1. A system mounted on an active and autonomous mobile platform (example is a humanoid robot) comprised of a camera part and an integrator part which can perform the above combination of subjective and objective information for scene analysis and in turn for controlling additional devices of the overall system like manipulators.
2. A system mounted on a passive or partially active and non-autonomous or partially autonomous mobile platform (example is an automobile) comprised of a camera part and an integrator part which can perform the above combination of subjective and objective information for scene analysis and in turn for controlling additional devices of the system like lights, brakes or seat-belts, etc.
3. A stationary system comprised of a camera part and an integrator part which can perform the above combination of subjective and objective information for scene analysis and in turn for controlling additional devices like alarm devices or providing requested information to a user.

## Claims

1. A computing system for gathering information from the environment, the system comprising:
- means for gathering visual information from the environment,
- means for receiving information actively transmitted by objects in the environment of the computing system, and
- means for combining the visual information as well as the wirelessly received information in order to recognize objects.

2. A computing system according to claim 1,
**characterized in that**
it is a mobile computing device.

3. A computing device according to any of the preceding claims,
**characterized in that**
it is a robot.

4. A computing device according to claim 1,
**characterized in that**
it is mounted in an automobile or motorbike.

5. A computing device according to claim 1,
**characterized in that**
it is a stationary device.

6. A method for gathering information from the environment, the method comprising the following steps:
- gathering visual information from the environment,
- receiving information actively transmitted by objects in the environment of the computing system, and
- combining the visual information as well as the wirelessly received information in order to recognize objects.

7. A computer software program product implementing a method according to claim 6 when running on a computing device.
